Europäisches Patentamt

European Patent Office

Office européen des brevets

(19)

(11) Numéro de publication: **0 089 422**
**B1**

(12) **FASCICULE DE BREVET EUROPEEN**

(45) Date de publication du fascicule du brevet:
**10.12.86**

(51) Int. Cl.⁴: **D 03 D 15/00**

(21) Numéro de dépôt: **82201257.1**

(22) Date de dépôt: **11.10.82**

(54) **Ecran d'ombrage et d'isolation pour serres ou écran de protection en plein air et procédé pour le confectionner.**

(30) Priorité: **19.03.82 BE 207617**

(43) Date de publication de la demande:
**28.09.83 Bulletin 83/39**

(45) Mention de la délivrance du brevet:
**10.12.86 Bulletin 86/50**

(84) Etats contractants désignés:
**AT CH DE FR GB IT LI LU NL SE**

(56) Documents cités:
**BE - A - 673 941**
**DE - A - 2 615 046**
**GB - A - 1 176 078**
**GB - A - 1 399 711**
**US - A - 3 817 802**

(73) Titulaire: **PHORMIUM N.V., Zevensterrestraat 10,
B-9140 Zele (BE)**

(72) Inventeur: **Verbeeck, Pierre, Koningin Astridplein 7,
B-9140 Zele (BE)**

(74) Mandataire: **De Brabanter, Maurice et al, Bureau
VANDER HAEGHEN 63 Avenue de la Toison d'Or,
B-1060 Bruxelles (BE)**

## Description

La présente invention a pour objet un écran d'ombrage et d'isolation constitué d'un tissu formé d'un damier composé d'une série de minces bandelettes entrelacées, réalisées en matière synthétique, disposées parfaitement à plat sans se chevaucher et présentant entre des bords adjacents de deux bandelettes juxtaposées, des interstices perméables à l'air mais imperméables à l'eau, répartis uniformément sur toute la surface de l'écran.

Elle s'applique principalement à des écrans utilisés en culture maraîchère et en horticulture pour protéger de la lumière et du froid, des végétaux et/ou des fleurs cultivés en serres ou en plein air.

L'invention concerne également un procédé pour confectionner un écran tel que décrit ci-dessus, à l'aide d'une série de bandelettes de faible épaisseur constituant des éléments de chaînes et de trame que l'on entrecroise et/ou entrelace.

On connaît un procédé pour confectionner un écran d'ombrage et d'isolation pour serres, à partir de bandelettes en matière synthétique. Dans ce procédé connu, on met en œuvre un métier à tisser automatique rectiligne classique.

Dans les métiers à tisser rectilignes, les fils de chaîne sont enroulés sous forme cylindrique, sur l'ensouple, ceux-ci se déroulent parallèlement les un par rapport aux autres par défilement, perpendiculairement à l'axe d'enroulement. Ils passent ensuite sur des lattes de séparation, puis dans les œillets des lisses, montées sur les cadres porte-lisses et destinées à séparer les éléments de chaîne en deux nappes entre lesquelles glisse au moins une navette.

Dans les métiers à tisser rectilignes classiques, la trame posée dans la navette susdite est dévidée longitudinalement, c'est-à-dire le long de l'axe d'enroulement du fil sur celle-ci. Le dévidage longitudinal permet de défiler la bandelette à des vitesses très irrégulières, inhérentes aux va-et-vient répétés de la navette munie de la trame. Le fil de trame n'effectue aucune rotation par rapport à l'axe d'enroulement de la bandelette. Seule la navette est en mouvement. Dans le tissage avec un fil torsadé, le dévidage longitudinal ne présente aucun inconvénient. Par contre, si le tissage est effectué à l'aide d'une bandelette plate, le dévidage longitudinal provoque une torsion à chaque spire. Cela entraîne des irrégularités visibles de la toile constituant l'écran susdit.

Un métier à tisser rectiligne ne permet donc pas de confectionner des écrans à quadrillage régulier. Les bandelettes constituant les éléments de chaîne et les éléments de la trame y subissent en effet inévitablement des pliages et des torsions dans le sens de la longueur, dus aux caractéristiques constructives mêmes des métiers rectilignes, les seuls utilisés jusqu'à présent pour la confection d'écrans susdits.

On connaît par la demande de brevet allemand DE-A 2 615 046 un métier à tisser destiné en particulier à la confection d'un canevas ou trame de tapis, comportant une navette dans laquelle la canette est disposée de manière qui le dévidage s'effectue dans une direction perpendiculaire à l'axe d'enroulement de la trame. On évite ainsi les torsions de la bandelette de trame. La machine décrite n'est cependant pas susceptible d'être utilisée pour le tissage d'un écran d'ombrage sans modifications importantes à apporter au dispositif de répartition de la bandelette de chaîne et aux dispositifs qui assurent une tension égale des bandelettes de trame et de chaîne.

On connaît également par le brevet belge n° 673 941, un tissu pour sac-conteneur formé à partir de bandelettes minces en matière synthétique entrelacées entre elles, constituant un damier suffisamment serré que pour être imperméable à l'eau mais perméable aux gaz.

Les bandelettes ont une épaisseur de 25 à 50 microns et une largeur d'environ 1,2 à 5,0 mm. Elles sont disposées parfaitement à plat sans se chevaucher, de manière à présenter entre les bords adjacents de deux bandelettes juxtaposées de minimales interstices répartis de manière uniforme sur toute la surface de l'écran.

Dans ces métiers circulaires connus, on juxtapose cependant toujours les fils de cahînes sur les lisses, de manière à obtenir par un recouvrement partiel des fils de chaînes les uns sur les autres, un emballage bien étanche. Ce recouvrement et l'alternance des tensions sur les éléments de chaîne ont, eux aussi, pour effet de provoquer le pliage de certaines bandelettes sur toute leur longueur. Ce pliage des bandelettes de chaîne provoque naturellement également des irrégularités visibles de la toile constituant l'écran susdit.

De tels tissus à fils plats entrelacés seraient susceptibles d'être utilisés comme écran d'ombrage et d'isolation, si la matière synthétique utilisées permettait de mieux limiter la quantité de chaleur absorbée ou émise par l'écran.

La présente invention propose de réaliser un écran qui permette de régler ou de doser l'intensité lumineuse de la serre en alternant une ou plusieurs bandelettes transparentes avec des bandelettes métallisées.

Elle permet d'obtenir un écran extrêmement solide et durable, malgré l'emploi d'un film polyester métallisé fragile et facilement déchirable.

En mettant en œuvre une matière qui réfléchit les rayons de soleil elle permet d'améliorer les performances d'isolation des écrans d'ombrage.

Elle concerne un écran d'ombrage et d'isolation pour serres ou un écran de protection en plein air formé d'un damier composé d'une série de mêmes bandelettes entrelacées, réalisées en matière synthétique, disposées parfaitement à plat sans se chevaucher et présentant entre des bords adjacents de deux bandelettes juxtaposées des interstices perméables à l'air mais imperméables à l'eau, répartis de manière uniforme sur toute la surface de l'écran, caractérisé en ce qu'il comprend dans le sens des éléments de chaîne ou des éléments de trame, les bandelettes en matière synthétique transparente et dans l'autre sens, les bandelettes en matière synthétique, dont certai-

2

nes au moins sont métallisées sur au moins une face, de manière à pouvoir réfléchir les rayons de soleil.

Dans une forme de réalisation particulière de l'invention, les éléments de chaîne sont des bandelettes en matière synthétique apte à filtrer les rayons de soleil.

L'invention concerne également un procédé pour confectionner un écran d'ombrage et d'isolation pour serres ou un écran de protection en plein air, à l'aide d'une série de bandelettes de faible épaisseur constituant des éléments de chaîne et de trame que l'on entrecroise et entrelace, ce procédé étant essentiellement caractérisé en ce qu'on réalise l'écran susdit sur un métier à tisser circulaire à partir de bandelettes en matière synthétique transparente et en matière synthétique métallisée, en disposant, dans le sens des éléments de chaîne ou dans le sens des éléments de trame, les bandelettes en matière synthétique transparente et dans l'autre sens, les bandelettes en matière synthétique réfléchissant ou filtrant les rayons du soleil éventuellement régulièrement alternées avec des bandelettes en matière transparente.

Suivant une autre particularité de l'invention, on coupe, par ultra sons, la toile cylindrique susdite le long d'une bandelette de chaîne pour obtenir un écran rectangulaire.

D'autres particularités et détails apparaîtront au cours de la description des dessins annexés qui représentent schématiquement et à titre non limitatif, une forme de réalisation des écrans d'ombrage à trame régulière confectionnés par le procédé suivant l'invention.

Dans ces dessins:

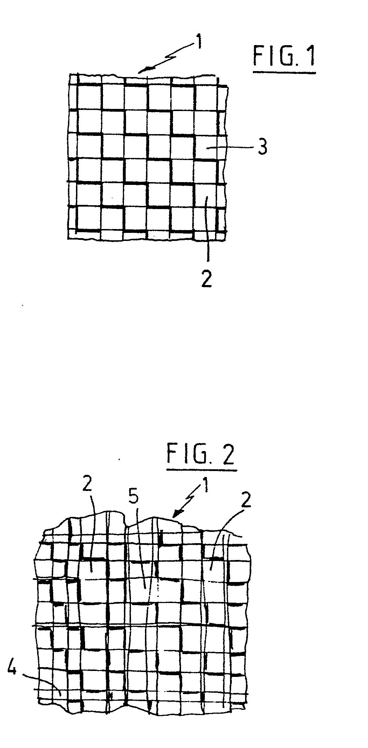

− la figure 1 est une vue en plan d'un écran confectionné sur un métier à tisser circulaire;

− la figure 2 est une vue analogue d'un écran confectionné sur un métier à tisser automatique rectiligne.

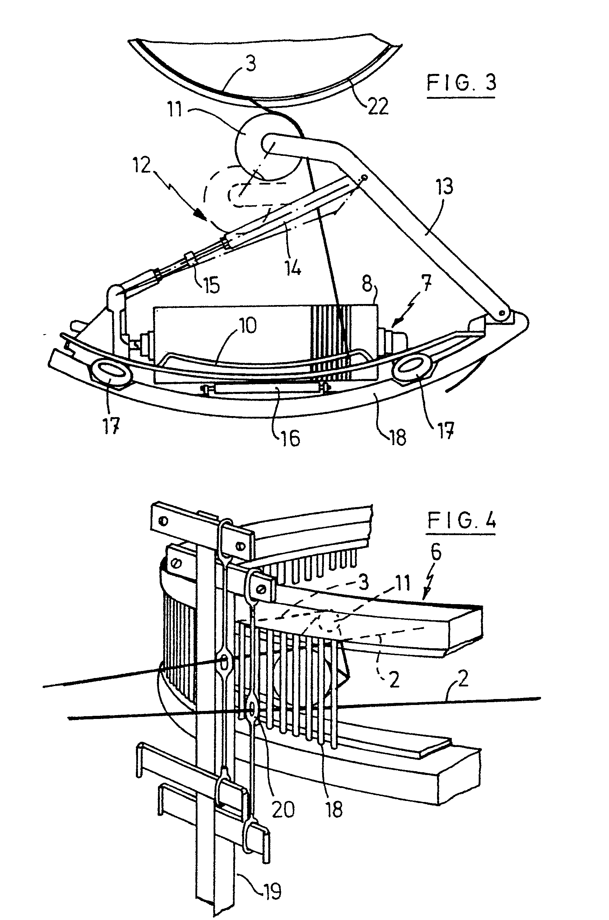

− la figure 3 est une vue en plan d'un dispositif d'insertion muni d'un compensateur;

− la figure 4 illustre de manière schématique, un métier à tisser circulaire, dans lequel la bandelette de chaîne est guidée et posée bien à plat.

Dans ces différentes figures, les mêmes notations de référence désignent des éléments identiques ou analogues.

Comme montré à la figure 1, l'écran d'ombrage et d'isolation suivant l'invention est constitué d'un damier désigné dans son ensemble par la notation de référence 1, composé d'une série de bandelettes parallèles en matière synthétique souple, constituant les éléments de chaîne 2 et d'une série de bandelettes, venant s'entre-croiser par va-et-vient avec la série d'éléments de chaîne susdits, perpendiculairement à celle-ci et constituant les éléments de trame 3, la matière des bandelettes étant comme décrit à la revendication 1.

Le damier 1 décrit ci-dessus présente une régularité parfaite très appréciée des horticulteurs.

Les écrans d'ombrage et d'isolation utilisés dans les serres pour protéger en culture maraîchère et horticulture les plantes des rayons du soleil et de l'action du froid doivent répondre à des normes très strictes de régularité, d'homogénéité, de perméabilité et de titre si l'on veut assurer une croissance égale de toutes les plantes de la serre. Ceci est indispensable pour assurer une floraison simultanée de toutes les plantes en un jour déterminé: le 1er mai, le jour de la Toussaint, etc...

L'obtention d'un tel écran, présentant une qualité supérieure à tout ce qui existe actuellement est lié à l'obtention d'un tissu dont toutes les bandelettes disposées dans le sens de la chaîne, restent uniformément plates. La même condition doit être remplie par les lanières disposées dans le sens de la trame.

Le damier 1 ainsi formé, présente à l'air une perméabilité uniforme qui permet la respiration des plantes sur toute la superficie couverte par l'écran. Il assure une température stable avec une tolérance minimale tant vers le haut que vers le bas.

Il permet un réglage des thermostats du chauffage de la serre sur une température plus basse. Il permet de contrôler l'écart de température entre les couches d'air situées au-dessus et en dessous de l'écran et donc de réaliser une économie d'énergie.

Un examen visuel sommaire d'une trame confectionnée sur un métier à tisser automatique rectiligne met en évidence les défauts dus au pliage 4 dans le sens de la longueur des bandelettes constituant des éléments de chaîne 2 et des défauts dus à la torsion 5 également dans le sens de la longueur des bandelettes constituant les éléments de trame 3 (Figure 2).

Des irrégularités des écrans provoquent également une condensation de la vapeur d'eau dans les zones plus froides. Une telle condensation est à éviter car la chute de gouttelettes d'eau peut abîmer les jeunes plants et laisser des taches indélébiles sur les feuilles.

On voit donc l'importance de remédier aux inconvénients des procédés connus de fabrication d'écrans d'ombrage.

Comme montré aux figures 3 et 4, on met en œuvre pour la fabrication d'écrans 1 susdits, un métier à tisser circulaire désigné dans son ensemble par la notation de référence 6 et garni de minces bandelettes 2, d'une largeur d'environ 2,4 millimètres constituant les éléments de chaîne et de bandelettes horizontales 3 constituant les éléments de trame. Les éléments de chaîne 2 sont enroulés sur des bobines non représentées sur la figure 3, disposées éventuellement autour du métier à tisser. Les éléments de trame sont enroulés sur des canettes 8 alimentant chacun un dispositif d'insertion 7 de bandelette de trame 3 entre les éléments de chaîne 2 susdits séparés en deux nappes.

Pour obtenir une porosité homogène et une régularité parfaite de l'écran, les bandelettes de trame sont disposées soigneusement à plat, les unes à côté des autres de manière à ne pas se recouvrir. Elles sont amenées à leur position finale 9 et guidées par les guides 10 et le galet 11 de manière à ne subir aucun pliage et leur tension est contrôlée individuellement à l'aide de compensateurs 12 composés chacun d'un petit levier 13 portant le galet 11 et étant actionné par un ressort 14 dont la tension peut être réglée par un écrou 15. Le déroulement de la canette 8 du dispositif d'insertion 7 est contrôlé et freiné par la brosse circulaire 16. Le dispositif d'insertion 7 s'appuie à l'aide des roulettes sur le rot 18.

La disposition régulière des fils de chaîne s'obtient à l'aide d'un rot 18 ou peigne placé le long des lisses 19 à hauteur des œillets 20 du métier à tisser, et entre les dents 21 duquel on place un ou plusieurs fils de chaîne 2. Le rot 18 assure ainsi un écartement constant entre les fils de chaîne 2 et un anneau 22 sert à fixer le diamètre du tissu sur le métier circulaire 6 (figure 4).

En répartissant uniformément les fils de chaîne 2 bien à plat tout en prévoyant un léger interstice, on peut fabriquer des écrans présentant une perméabilité bien déterminée. Cette perméabilité ou porosité confère à l'écran des propriétés particulières pouvant faire l'objet d'applications nouvelles. L'écran rend possible une aération régulière et uniforme des serres puisqu'un échange d'air est rendu possible entre les couches d'air situées de part et d'autre de l'écran. Certaines valeurs de la perméabilité de l'écran, permettent le passage sélectifs d'une quantité limitée d'air et interdisent toute infiltration d'eau.

La fabrication d'un tel écran semi-perméable, c'est-à-dire perméable à l'air mais imperméable à l'eau, est illustrée par les exemples suivants.

EXEMPLE 1

On fabrique un écran présentant une perméabilité de l'ordre de 0,16% en disposant bien à plat tout autour du métier à tisser circulaire, 400 bandelettes de chaîne d'une largeur de 2,4 mm par mètre de toile et on règle l'avancement de la toile de façon à introduire également 400 bandelettes comme élément de trame, par mètre courant de toile. On couvre ainsi par les bandelettes de chaîne 96% de l'écran en largeur et par les bandelettes de trame, 96% de l'écran dans le sens de la longueur. La perméabilité de l'écran résulte des interstices formant un espace libre entre les bords adjacents des bandelettes de chaîne et les bandelettes de trame juxtaposées. Elle peut être déterminée par un calcul élémentaire:

$$P = (0,04)^2 = 0,16\%$$

Cette perméabilité de l'écran permet aux plantes de respirer puisqu'elle assure un échange d'air entre la couche d'air emprisonnée dans la serre sous l'écran d'ombrage et la couche d'air située au-dessus de l'écran. Ces deux couches d'air présentent habituellement des états hygrométriques différents.

Pour la culture de plantes tropicales dans nos régions, on veille par exemple à assurer dans la serre des conditions d'humidité et de température optimales en chauffant en hiver la serre à une température voisine de 22 °C.

Pour une température de 22,9 °C et une humidité relative de 75%, l'atmosphère ambiante dans la serre présentera une humidité absolue ou teneur en eau de 13,5 g d'eau/kg d'air sec. La couche d'air supérieure, située entre l'écran et les parois extérieures de la serre eput être plus froide et n'atteindre que 10 °C. Étant donné l'échange d'air entre la couche inférieure et la couche supérieure, cette dernière s'enrichit continuellement en vapeur d'eau. A la température de 10,5 °C par exemple, l'air est saturé de vapeur d'eau lorsqu'il contient 6,6 g d'eau/kg d'air sec.

La couche supérieure est en général saturée de vapeur d'eau et le moindre refroidissement ultérieur ou enrichissement ultérieur en vapeur d'eau provoque une condensation d'une partie de la vapeur, soit sous forme de brouillard, soit sous forme de dépôt d'eau liquide sur les parois froides de la serre. Les parois froides sont généralement les parois qui sont en contact avec le milieu extérieur plus froid.

Il se forme des gouttelettes de condensation qui se déposent sur les parois de la serre. En s'écoulant le long des parois, ces gouttelettes risquent de tomber sur l'écran d'ombrage. Grâce à l'imperméabilité de l'écran à l'eau, ces gouttelettes n'atteignent pas les feuilles car elles forment sur l'écran une nappe d'eau qui s'écoulera éventuellement le long de cet écran.

Lorsque l'écran d'ombrage présente une perméabilité uniforme sur toute sa surface, il assure en fait une répartition uniforme du degré hygrométrique dans la couche supérieure.

L'absence de zones d'air sursaturées en eau localement permet d'abaisser légèrement la température de l'ensemble de la serre et de réaliser ainsi une économie de combustible pour le chauffage.

EXEMPLE 2.

L'écran suivant l'invention trouve une application nouvelle dans la culture maraîchère et l'horticulture, comme écran d'ombrage en plein air dans les zones tempérées et les zones tropicales.

Dans certains pays chauds, il peut exister entre le jour et la nuit des écarts de température énormes, d'environ 30 à 40 °C en 12 heures.

Pour assurer aux plantes des conditions de croissance optimale, il faut maintenir l'humidité relative à environ 75%. Un tel état hygrométrique ne peut être obtenu dans les pays secs qu'en limitant l'échange d'air entre la couche d'air emprisonnées sous l'écran d'ombrage et l'atmosphère ambiante dans un climat aride.

Le procédé décrit permet, en choisissant judicieusement la contexture, de confectionner une toile qui, grâce à sa régularité et sa densité, présente une perméabilité à l'air homogène et bien déterminée que l'on choisira en fonction des conditions climatiques et des contraintes particulières à chaque culture.

Cette perméabilité homogène permet en fait de régler et d'optimaliser l'aération indispensable des plantes et de limiter ainsi la consommation d'eau.

Etant donné le fait que, contrairement aux écrans d'ombrage connus à ce jour, les bandelettes sont disposées bien à plat, elles procurent à l'écran suivant l'invention, une souplesse, une légèreté et une régularité inégalée à ce jour. Cet écran présente de fait, sur toute sa surface, une épaisseur double due à la superposition en chaque point de l'écran, d'une bandelettes de chaîne et d'une bandelette de trame, alors que dans les écrans connus à ce jour, l'épaisseur de la toile est à plusieurs endroits triple ou même quadruple puisque chacune des bandelettes de chaîne ou de trame peut être repliée sur elle-même dans le sens de la longueur.

Il est donc évident que l'encombrement d'une toile suivant l'invention, lorsqu'on la replie sur elle-même pour dégager la serre, est inférieur à celui des écrans connus.

Pour certaines applications, il peut cependant être intéressant de replier la toile cylindrique sur elle-même pour réaliser un écran double, de préférence en matière synthétique opaque. On soude alors avantageusement les bords des toiles constituant l'écran double susdit.

On peut réaliser l'écran susdit à partir de bandelettes en matière synthétique transparente ou en matière synthétique filtrant les rayons ultraviolets due soleil ainsi que la matière synthétique transparente métallisée, en particulier un film polyester métallisé, réfléchissant les rayons du soleil.

On dispose alors, dans le sens des éléments de chaîne, les bandelettes en matière synthétique transparente et dans le sens des éléments de trame les bandelettes en matière synthétique métallisée réfléchissant ou filtrant les rayons du soleil éventuellement régulièrement alternées avec des bandelettes en matière synthétique transparente. La densité des bandelettes métallisée réfléchissant les rayons du soleil permettra de régler ou doser l'intensité lumineuse de la serre. Il est également possible de disposer, dans le sens des éléments de trame, les bandelettes en matière synthétique transparente et dans le sens des éléments de chaîne, les bandelettes en matière synthétique métallisée réfléchissant ou filtrant les rayons du soleil éventuellement régulièrement alternées avec des bandelettes en matière synthétique transparente.

Malgré la fragilité de ce film polyester métallisé qui se déchire très facilement, on obtient par le procédé suivant l'invention, un écran extrêmement solide et durable.

## Revendications

1. Écran d'ombrage et d'isolation constitué d'un tissu formé d'un damier (1) composé d'une série de minces bandelettes entrelacées, réalisées en matière synthétique, disposées parfaitement à plat sans se chevaucher et présentant entre des bordes adjacents de deux bandelettes juxtaposées, des interstices perméables à l'air mais imperméables à l'eau répartis de manière uniforme sur toute la surface de l'écran, caractérisé en ce qu'il comprend, dans le sens des éléments de chaîne (2) ou des éléments de trame (3), des bandelettes en matière synthétique transparente et dans l'autre sens, des bandelettes en matière synthétique, dont certaines au moins sont métallisées sur au moins une face, de manière à pouvoir réfléchir les rayons de soleil.

2. Écran d'ombrage et d'isolation selon la revendication 1, caractérisé en ce que les éléments de chaîne ou de trame (2, 3) sont des bandelettes en matière synthétique apte à filtrer les rayons de soleil.

3. Écran d'ombrage et d'isolation selon la revendication 2, caractérisé en ce que les éléments de chaîne ou de trame sont des bandelettes métallisées formant des alternances régulières avec des bandelettes en matière synthétique transparente.

4. Procédé pour convectionner un écran d'ombrage et d'isolation pour serres ou un écran de protection en plein air suivant l'une quelconque des revendications précédentes, à l'aide d'une série de minces bandelettes constituant des éléments de chaîne et de trame, que l'on entrecroise et entrelace, caractérisé en ce qu'on réalise l'écran susdit sur un métier à tisser circulaire à partir de bandelettes en matière synthétique transparente et en matière synthétique métallisée, en disposant, dans le sens des éléments de chaîne (2) ou dans le sens des éléments de trame, les bandelettes en matière synthétique métallisée réfléchissant les rayons du soleil éventuellement régulièrement alternées avec des bandelettes en matière synthétique transparente.

5. Procédé suivant la revendication 4, caractérisé en ce qu'on coupe la toile cylindrique susdite à l'aide d'un outil (11) à ultra-sons.

## Claims

1. A shading and insulating screen consisting of a check fabric (1) composed of a series of thin interwoven strips of synthetic material, arranged perfectly flat without overlapping and having, between the adjacent edges of two juxtaposed strips, interstices permeable to air but impermeable to water and distributed uniformly over the whole surface of the screen, characterized in that it comprises, in the direction of the warp members (2) or the weft members (3), strips of transparent material, and in the other direction strips of synthetic material at least some of which are metallized on at least one face so as to be able to reflect the sun's rays.

2. A shading and insulating screen according to claim 1, characterized in that the warp or weft members (2, 3) are strips of synthetic material capable of filtering the sun's rays.

3. A shading and insulating screen according to claim 2, characterized in that the warp or weft members are metallized strips alternating regularly with strips of transparent synthetic material.

4. A process for constructing a shading and insulating screen for greenhouses or an outdoor protection screen according to any one of the preceding claims, with the aid of a series of thin strips forming warp and weft members, which are criss-crossed and interlaced, characterized in that the above-mentioned screen is produced on a circular loom from strips of transparent synthetic material and metallized synthetic material, the strips of metallized synthetic material for reflecting the sun's rays optionally being arranged, in the direction of the warp members (2) or in the direction of the weft members, regularly alternated with strips of transparent synthetic material.

5. A process according to claim 5, characterized in that the above-mentioned cylindrical cloth is cut with an ultrasonic tool (11).

## Patentansprüche

1. Sonnen- und Isolationsschild, bestehend aus einem Gewebe in Form eines Schachbretts (1), welches durch eine Reihe von miteinander verwebten dünnen Bändchen aus synthetischem Material gebildet ist, die vollkommen flach ohne gegenseitige Überlappung angeordnet sind, und welches zwischen angrenzenden Rändern zweier nebeneinanderliegender Bändchen luftdurchlässige, aber das gleichmässig über die gesamte Oberfläche des Schilds verteilte Wasser nicht durchlassende Lücken aufweist, dadurch gekennzeichnet, dass er in Richtung Kettelemente (2) oder Schusselemente (3) Bändchen aus transparentem synthetischem Material umfasst und in anderer Richtung Bändchen aus synthetischem Material umfasst, von denen zumindest gewisse auf mindestens einer Seite metallbeschichtet sind, sodass sie die Sonnenstrahlen reflektieren können.

2. Sonnen- und Isolationsschild nach Anspruch 1, dadurch gekennzeichnet, dass die Kett- oder Schusselemente (2, 3) zum Filtern der Sonnenstrahlen geeignete Bändchen aus synthetischem Material sind.

3. Sonnen- und Isolationsschild nach Anspruch 2, dadurch gekennzeichnet, dass die Kett- oder Schusselemente metallbeschichtete Bändchen sind, die sich mit Bändchen aus transparentem synthetischem Material regelmässig abwechseln.

4. Verfahren zur Anfertigung eines Sonnen- und Isolationsschilds für Glashäuser oder eines Freiluft-Schutzschilds nach einem der vorhergehenden Ansprüche, mit Hilfe einer Reihe von dünnen, Kett- und Schusselemente bildenden Bändchen, die man überkreuzt und miteinander verwebt, dadurch gekennzeichnet, dass man besagten Schild auf einem Rundwebstuhl herstellt, ausgehend von Bändchen aus transparentem synthetischem Material und aus metallbeschichtetem synthetischem Material, indem man in Richtung der Kettelemente (2) oder in Richtung der Schusselemente die die Sonnenstrahlen reflektierenden Bändchen aus metallbeschichtetem synthetischem Material, gegebenenfalls regelmässig abwechselnd mit Bändchen aus transparentem synthetischem Material, anordnet.

5. Verfahren nach Anspruch 5, dadurch gekennzeichnet, dass man besagtes Schlauchgewebe mit Hilfe eines Ultraschallgeräts (11) schneidet.

FIG. 1

FIG. 2

FIG. 3

FIG. 4